# EUROPÄISCHE PATENTSCHRIFT

(11) **EP 3 729 738 B1**
(45) Veröffentlichungstag und Bekanntmachung des Hinweises auf die Patenterteilung: **09.02.2022**
(21) Anmeldenummer: 18826581.3
(22) Anmeldetag: 17.12.2018
(51) Int. Cl.: H04L 12/40

(54) **VERFAHREN ZUM SENDEN VON DATENPAKETEN, STEUERGERÄT UND SYSTEM MIT STEUERGERÄT**
METHOD FOR TRANSMITTING DATA PACKETS, CONTROL UNIT AND SYSTEM HAVING CONTROL UNIT
PROCÉDÉ D'ÉMISSION DE PAQUETS DE DONNÉES, APPAREIL DE COMMANDE ET SYSTÈME POURVU D'APPAREIL DE COMMANDE

(30) Priorität: 19.12.2017 DE 102017130547
(43) Veröffentlichungstag der Anmeldung: 28.10.2020
(73) Patentinhaber: VOLKSWAGEN AKTIENGESELLSCHAFT, 38440 Wolfsburg (DE)
(72) Erfinder: MEIER, Alexander, 38442 Wolfsburg (DE); KRIEGER, Olaf, 39291 Lostau (DE)
(74) Vertreter: 2SPL Patentanwälte PartG mbB
(86) Internationale Anmeldenummer: PCT/EP2018/085271
(87) Internationale Veröffentlichungsnummer: WO 2019/121549

(56) Entgegenhaltungen:
- EP-A1- 3 151 475
- WO-A1-2016/110326
- DE-A1-102012 000 188
- US-A1- 2002 087 716

## Beschreibung

Die vorliegende Erfindung bezieht sich auf ein Verfahren zum Senden von Datenpaketen von einem ersten Kommunikationsteilnehmer über einen mit zumindest einem weiteren Kommunikationsteilnehmer geteilten Übertragungskanal. Die Erfindung bezieht sich weiterhin auf ein Steuergerät, das zum Ausführen des Verfahrens ausgebildet ist sowie ein System mit zumindest einem Steuergerät.

In Fahrzeugen kann eine Vernetzungstechnologie zum Kommunizieren von Fahrzeuggeräten bereitgestellt sein, beispielsweise kann eine Ethernet-Verbindung mit einer Datenrate von 10 Mbit/s für den Einsatz in Fahrzeugen bereitgestellt sein. Dabei kann ein gemeinsam genutzter oder von mehreren Kommunikationsteilnehmern geteilter Übertragungskanal (ein sogenanntes "shared medium") zum Einsatz kommen. Über einen solchen geteilten Übertragungskanal kann zu einem Zeitpunkt nur maximal ein Netzwerkteilnehmer ein Datenpaket senden, siehe auch die Offenlegungsschrift DE 10 2012 000188 A1.

Netzwerkteilnehmer oder Kommunikationsteilnehmer bestehen beispielsweise mindestens aus einem Mikrokontroller (µC), auf dem etwa eine Applikationssoftware ausgeführt werden kann, und einer Netzwerkschnittstelle. Ethernet-basierte Netzwerkschnittstellen können aus einer PHY (Physical Layer Attachment)- und einer MAC (Media Access Controller)-Komponente bestehen. Die PHY-Komponente ist etwa dafür zuständig, digitale Signale, etwa Datenpakete, von der MAC-Komponente auf das Übertragungsmedium oder den Übertragungskanal aufzuprägen. Darüber hinaus steuert die PHY-Komponente den Zugriff auf das Übertragungsmedium, in dem er dafür sorgt, dass niemals zwei Teilnehmer gleichzeitig versuchen, auf das Übertragungsmedium zu schreiben.

Die MAC-Komponente generiert aus den zu übertragenen Daten ein gültiges Ethernet-Frame und übergibt dies etwa bitweise (z.B. vier Bit parallel) an die PHY-Komponente zur Übertragung sobald diese signalisiert, dass sie das Recht zum Schreiben auf das Übertragungsmedium besitzt. Nachrichten anderer Teilnehmer können von der PHY-Komponente gelesen und bitweise an die MAC-Komponente übertragen werden. Die MAC-Komponente kann daraus ein Empfangs Ethernet-Frame zusammensetzen und entscheiden, ob das Paket für sie bestimmt war und weiterverarbeitet werden soll oder verworfen werden kann.

Es sind MAC-Komponenten eines Kommunikationsteilnehmers bekannt, die mehrere Sende und Empfangs-Warteschlangen mit unterschiedlichen Prioritäten besitzen. Ein Scheduler (Planer) innerhalb der MAC-Komponente legt die Warteschlange fest, aus der das erste Element, also das Element, welches als nächstes gesendet werden soll, entnommen wird, um übertragen zu werden. Für Echtzeitsysteme wie z.B. Steuerungs- und Regelungssysteme im Fahrzeug kann dafür ein sogenannter Strict Priority Scheduler zum Einsatz kommen. Das führt dazu, dass immer zuerst die Nachrichten mit der höchsten Priorität übertragen werden und erst dann, wenn keine hoch-prioren Pakete (d.h. Pakete mit hoher Priorität)mehr in der Warteschlange der MAC-Komponente liegen, Pakete aus der Warteschlange mit der nächst niedrigeren Priorität übertragen werden.

Die PHY-Komponente ist für den schreibenden Zugriff auf das gemeinsame Übertragungsmedium ausgebildet. Um Kollisionen zu vermeiden, die beim gleichzeitigen schreibenden Zugriff mehrerer Teilnehmer auf das Übertragungsmedium entstehen würden, wird ein Kollisionsvermeidungsverfahren benötigt. Für den Einsatz in 10Mbit/s Automotive Ethernet ist etwa ein Verfahren PLCA (PHY Level Collision Avoidance, Kollisionsvermeidung) bekannt. In diesem Verfahren besitzt jeder Teilnehmer ein dediziertes Zeitfenster, in dem nur er Daten senden darf. Wenn der Sendevorgang abgeschlossen ist oder der Teilnehmer innerhalb einer vorbestimmten Zeitdauer nicht mit dem Senden begonnen hat, ist der nächste Teilnehmer an der Reihe. Nach dem alle Teilnehmer die Möglichkeit hatten einen Frame oder ein Datenpaket zu senden, beginnt der Kommunikationszyklus von neuem. Somit kann gewährleistet sein, dass alle Kommunikationsteilnehmer gleichberechtigt sind, Datenpakete über den geteilten Übertragungskanal zu senden.

In der US 2016 0373362 A1 ist eine Netzwerksteuerung gezeigt. Die Netzwerksteuerung kann einen Sende-Schaltkreis aufweisen, der dazu ausgebildet ist, Pakete basierend auf einer angepassten Priorität zu senden.

In der US 2014 0341032 A1 ist ein Gerät mit zwei Pfaden A und B gezeigt, die jeweils Daten-übertragungsblöcke verschiedener Priorität bearbeiten können. Das Gerät kann priorisierte Kommunikation von hoch priorisierten Daten unterstützen. Dazu kann das Gerät eine Kommunikation von Paketen niedrigerer Priorität unterbrechen, um Pakete höherer Priorität zu senden. Das Gerät also von ihm gesendete Daten der Priorität nach geordnet senden.

In der US 2008 0071924 A1 ist ein Sendeknoten gezeigt, der ein niedrig priorisiertes Paket senden kann. Der Sendeknoten kann das Senden des niedrig priorisierten Paketes unterbrechen, falls ein hoch priorisiertes Paket zum Senden am Sendeknoten verfügbar ist. Wenn alle hoch priorisierten Pakete gesendet sind, kann der Sendeknoten mit dem Senden des niedrig priorisierten Pakets fortfahren.

In einem Fahrzeug kann also ein erster Kommunikationsteilnehmer Datenpakete verschiedener Priorität der Reihe nach senden. Der erste Kommunikationsteilnehmer kann dabei Datenpakete senden, wenn beispielsweise ein zweiter Kommunikationsteilnehmer keine Datenpakete sendet. Dabei kann sich der Nachteil ergeben, dass der geteilte Übertragungskanal durch Datenpakete vom zweiten Kommunikationsteilnehmer zeitweise belegt ist und Datenpakete des ersten Kommunikationsteilnehmers daher nicht unmittelbar gesendet werden können, da der zweite Kommunikationsteilnehmer etwa eine gleiche Berechtigung bezüglich einem für ihn vorgesehenen Sendezeitfenster besitzt wie der erste Kommunikationsteilnehmer. Dies kann den Nachteil haben, dass es eine gewisse Zeitverzögerung geben kann, bis Datenpakete des ersten Kommunikationsteilnehmers über den Übertragungskanal gesendet werden können.

Während ein Senden von Datenpaketen von mehreren Kommunikationsteilnehmern über einen geteilten Übertragungskanal zuvor anhand eines Kraftfahrzeugs rein beispielhaft beschrieben ist, können Kommunikationsteilnehmer auch in einem anderen Kontext einen geteilten Übertragungskanal nutzen, etwa in einem Bereich der allgemeinen Automatisierungstechnik oder in einem Bereich der Hausautomatisierung.

Aus der US 9 585 053 B2 ist ein Verfahren zum Übertragen von Datenpaketen in einem Kommunikationsnetzwerk aus synchronisierten Knoten über einen vorbestimmten Pfad in dem Kommunikationsnetzwerk bekannt. Dabei senden Kommunikationsknoten gleichzeitig, d.h. zu einem bestimmten Zeitpunkt, jeweilige Datenpakete in den vorbestimmten Pfad.

Aus der US 2014 341 032 (A1) ist ein Netzwerkgerät bekannt, das ein Schutzband implementieren kann, um eine Latenz beim Übertragen von Daten mit hoher Priorität zu reduzieren. Das Netzwerkgerät kann eine geplante Kommunikationszeit für Daten hoher Priorität identifizieren.

Aufgabe der Erfindung ist es, ein Verfahren zum Senden von Datenpaketen über einen von mehreren Kommunikationsteilnehmern geteilten Übertragungskanal zu verbessern.

Die Aufgabe wird gelöst gemäß den unabhängigen Patentansprüchen. Vorteilhafte Weiterbildungen der Erfindung sind in den abhängigen Patentansprüchen, der folgenden Beschreibung sowie den Figuren beschrieben.

Ein Aspekt der Erfindung betrifft ein Verfahren zum Senden zumindest eines Datenpakets von einem ersten Kommunikationsteilnehmer über einen mit zumindest einem weiteren Kommunikationsteilnehmer geteilten Übertragungskanal. Datenpakete werden von den Kommunikationsteilnehmern, das bedeutet von allen über den geteilten Übertragungskanal sendenden Kommunikationsteilnehmern, gemäß einem Rundlauf-Verfahren gesendet. Das bedeutet, dass in einem Kommunikationszyklus jeder Kommunikationsteilnehmer ein Sendefenster oder einen Zeitschlitz zugeordnet bekommt, innerhalb dessen er ein Datenpaket senden kann. Falls ein Kommunikationsteilnehmer innerhalb des ihm zugewiesenen Zeitschlitzes kein Datenpaket sendet, kann der nächste Kommunikationsteilnehmer innerhalb einer Reihe des Kommunikationszyklus sein Datenpaket senden. An den Übertragungskanal sind etwa ein erster Kommunikationsteilnehmer und zumindest ein zweiter Kommunikationsteilnehmer angeschlossen. Die Kommunikationsteilnehmer sind etwa mittels einer jeweiligen PHY-Komponente an den Übertragungskanal angeschlossen, um über diesen Datenpakete zu senden und zu empfangen. Beispielhaft kann ein geteilter Übertragungskanal ein Kommunikationsbus sein, über den eine Ethernet-Verbindung bereitgestellt ist. Beispielhaft kann eine 10Mbit/s Automotive Ethernet-Verbindung bereitgestellt sein. Ein Kommunikationsverfahren kann dazu eingerichtet sein, dass alle Kommunikationsteilnehmer in einem Sendezyklus hintereinander das Recht erhalten, ein Datenpaket zu senden. Wenn eine Nachricht eines Kommunikationsteilnehmers beispielsweise aus vier Datenpaketen besteht, kann es sein, dass der Kommunikationsteilnehmer die Nachricht innerhalb von vier Sendezyklen versenden kann. Jeder der Kommunikationsteilnehmer kann dabei Datenpakete versenden, die einen Prioritätswert aufweisen, der im Datenpaket enthalten sein kann. Die Kommunikationsteilnehmer können je nach Dringlichkeit des Datenpaketes verschiedene Prioritätswerte im Datenpaket einfügen oder mitsenden. Mit anderen Worten, Kommunikationsteilnehmer sind dazu ausgebildet, um Datenpakete mit je verschiedenen Prioritätswerten zu senden über den geteilten Übertragungskanal zu senden.

Das Verfahren umfasst erfindungsgemäß ein Empfangen von dem ersten Kommunikationsteilnehmer von zumindest einem Datenpaket von dem zumindest einen weiteren (etwa dem zweiten) Kommunikationsteilnehmer über den geteilten Übertragungskanal und Ermitteln eines dem weiteren Kommunikationsteilnehmer zugeordneten Prioritätswertes aus dem Datenpaket. Mit anderen Worten, der erste Kommunikationsteilnehmer empfängt ein Datenpaket, das von einem weiteren Kommunikationsteilnehmer über den geteilten Übertragungskanal gesendet ist.

Der erste Kommunikationsteilnehmer empfängt etwa vom zweiten Kommunikationsteilnehmer ein Datenpaket. Der erste Kommunikationsteilnehmer ist also dazu ausgebildet, Datenpakete von den weiteren Kommunikationsteilnehmern zu empfangen. Dabei kann es irrelevant sein, ob ein empfangenes Datenpaket für den ersten oder einen anderen der weiteren Kommunikationsteilnehmer bestimmt ist. Das Verfahren ist lediglich beispielhaft anhand des ersten Kommunikationsteilnehmers beschrieben und kann auch an den weiteren Kommunikationsteilnehmern ausgeführt werden. Das bedeutet, dass etwa auch der zweite Kommunikationsteilnehmer Datenpakete vom ersten Kommunikationsteilnehmer empfangen kann und das vorgestellte Verfahren analog ausführen kann.

Aus dem vom ersten Kommunikationsteilnehmer empfangenen Datenpaket kann ein Prioritätswert ermittelt werden. Jedes übertragene Datenpaket kann eine Prioritätsinformation enthalten, beispielsweise zusätzlich zu einer anderen Information. Beispielsweise sieht der Ethernet-Standard IEEE 802.1Q einen 3-Bit-Wert als Priorität vor, der in einem Datenpaket enthalten sein und ermittelt werden kann. Ein Wert 0 entspricht zum Beispiel einer niedrigsten Priorität, ein Wert 7 einer höchsten Priorität. Beispielsweise kann der erste Kommunikationsteilnehmer ein Datenpaket empfangen, welches der zweite Kommunikationsteilnehmer gesendet hat und aus diesem beispielsweise eine Priorität des Wertes 7 ermitteln.

Verfahrensgemäß erfolgt ein Senden des Datenpakets von dem ersten Kommunikationsteilnehmer über den geteilten Übertragungskanal in Abhängigkeit von dem Prioritätswert. Damit kann etwa gemeint sein, dass in Abhängigkeit von dem ermittelten Prioritätswert der erste Kommunikationsteilnehmer ein Datenpaket beispielsweise zu einem bestimmten Zeitpunkt gesendet oder ob er das Datenpaket erst zu einem späteren Zeitpunkt gesendet. Wenn beispielsweise der erste Kommunikationsteilnehmer ein Gerät ist, das keine eiligen oder echtzeitrelevanten Nachrichten, etwa lediglich Nachrichten mit geringer Priorität (zum Beispiel mit Prioritätswert 1) versendet, so kann beispielsweise der erste Kommunikationsteilnehmer auf das Senden des Datenpaketes verzichten, wenn er aus dem Datenpaket des zweiten Kommunikationsteilnehmers eine Priorität des Wertes 7 ermittelt hat. Verzichten bedeutet, dass ein Kommunikationsteilnehmer sein ihm zugeordnetes Zeitfenster oder Zeitschlitz eines Kommunikationszyklus ungenutzt lässt, obwohl er ein Datenpaket zum Senden bereithält. Beispielsweise kann der zweite Kommunikationsteilnehmer in einigen hintereinander folgenden Sendezyklen jeweils Datenpakete (die eine Nachricht bilden können) senden, die eine hohe Priorität haben und ab einem gewissen Zeitpunkt Datenpakete senden, die weniger eilig sind und deshalb eine geringere Priorität haben. Dadurch, dass der erste Kommunikationsteilnehmer auf das Senden innerhalb eines ihm zugewiesenen Zeitfensters verzichtet, kann der Sendezyklus verkürzt werden (im Gegensatz zu einem Fall, in dem auch der erste Kommunikationsteilnehmer sendet), sodass insgesamt die Nachricht des zweiten Kommunikationsteilnehmers schneller übertragen werden kann. Aus Datenpaketen mit einer geringeren Priorität kann der erste Kommunikationsteilnehmer beispielsweise einen Prioritätswert von null ermitteln. Es ist beispielsweise möglich, dass der Kommunikationsteilnehmer sein Datenpaket zu dem Zeitpunkt sendet, zu dem ein Sendezeitfenster für ihn vorgesehen ist, und, falls er aus einem zuletzt vom zweiten Kommunikationsteilnehmer empfangenen Datenpaket einen Wert eine Priorität von beispielsweise null empfangen hat, wenn also der zweite Kommunikationsteilnehmer seine höher-priore Nachricht vollständig gesendet hat und darauffolgend Nachrichten gleicher Priorität wie der erste Kommunikationsteilnehmer sendet.

Durch das Verfahren kann es ermöglicht werden, eine dezentralisierte Priorisierung von voneinander unabhängigen Kommunikationsteilnehmern, welche Datenpakete über einen geteilten Übertragungskanal versenden, bereitzustellen. Damit ist gemeint, dass Kommunikationsteilnehmer, welche Datenpakete mit einer höheren Priorität zum Versenden aufweisen, den geteilten Übertragungskanal bevorzugt zugewiesen bekommen oder bevorzugt Schreibrechte zum Senden der Datenpakete mit einer höheren Priorität zugeteilt bekommen, ohne dass eine zentrale Steuervorrichtung etwa zum Zuteilen eines jeweiligen Schreibrechtes benötigt ist. Die Schreibrechte werden also von den Kommunikationsteilnehmern untereinander in Abhängigkeit deren Priorität verteilt. Der Vorteil ist, dass jeweils der Kommunikationsteilnehmer mit der höchsten Priorität den Vorrang bekommen kann, seine Nachrichten oder Datenpakete zu senden, ohne dass eine zusätzliche Sendesteuereinrichtung in einem Kommunikationssystem notwendig ist. Die Aufteilung einer Übertragunskanalkapazität erfolgt also effizient und derart, dass eilige Nachrichten bevorzugt gesendet werden.

Beispielsweise können in einem ersten Modus drei verschiedene Kommunikationsteilnehmer jeweils Datenpakete einer selben Priorität versenden. In dem ersten Modus kann ein Kommunikationszyklus so ausgestaltet sein, dass jeweils ein Kommunikationsteilnehmer ein Datenpaket versendet und nach einer vorbestimmten Sendepause ein weiterer Kommunikationsteilnehmer ein Datenpaket versendet, sodass die Kommunikationsteilnehmer ihre Datenpakete der Reihe nach versenden. In einem zweiten Modus kann beispielsweise der zweite der drei Kommunikationsteilnehmer ein Datenpaket einer höheren Priorität versenden. Dieses wird von den beiden anderen Kommunikationsteilnehmern empfangen und der höhere Prioritätswert wird ermittelt. In diesem Beispiel des zweiten Modus kann durch das Verfahren ein Kommunikationszyklus so ausgestaltet sein, dass alle Kommunikationsteilnehmer bis auf den zweiten Kommunikationsteilnehmer auf das Senden von Datenpaketen verzichten, sodass der zweite Kommunikationsteilnehmer seine Datenpakete mit höherer Priorität versenden kann, da der geteilte Übertragungskanal in diesem Fall alleine von ihm genutzt wird. Sobald der zweite Kommunikationsteilnehmer alle Datenpakete der höheren Priorität versendet hat, kann er wieder ein Datenpaket niedriger Priorität, so wie im ersten Modus, versenden. In diesem Fall können die weiteren Kommunikationsteilnehmer ermitteln, dass der zweite Kommunikationsteilnehmer Datenpakete derselben Priorität wie sie versendet und wiederum selbst Datenpakete versenden, sodass der Kommunikationszyklus des ersten Modus wieder aufgenommen werden kann.

Jeder Teilnehmer oder Kommunikationsteilnehmer kann die Daten auf dem Übertragungsmedium beobachten und den höchsten beobachteten Prioritätswert der letzten Kommunikationsrunde speichern. Dies bedeutet beispielsweise in einem Kommunikationszyklus mit Zeitfenstern, die jeweils hintereinander folgend einem Kommunikationsteilnehmer zugeordnet sind: Wenn der Teilnehmer in einem Zeitfenster n senden darf, wertet er die Prioritätsinformationen aus den Zeitfenstern ab n+1 des letzten Kommunikationszyklus (oder Sendezyklus) sowie die Zeitfenster bis n-1 des aktuellen Kommunikationszyklus aus.

Beispielsweise wird die Prioritätsinformation von einer PHY-Komponente eines jeweiligen Kommunikationsteilnehmers ermittelt. Die PHY-Komponente sendet ihr Datenpaket beispielsweise nur dann, wenn die Priorität des eigenen Pakets genauso hoch oder höher ist als die höchste beobachtete Priorität eines anderen Kommunikationsteilnehmers. Wenn die Priorität des eigenen Pakets geringer ist, verzichtet ein Teilnehmer auf das Recht, zu Senden und blockiert dadurch nicht den gemeinsamen Kommunikationskanal mit einem niedrig-prioren Paket. Wenn alle Teilnehmer oder Kommunikationsteilnehmer in einem Netzwerk das erfindungsgemäße Verfahren anwenden, können Nachrichten mit hoher Priorität übertragen werden, ohne dass sie von Paketen niedriger Priorität unterbrochen werden. Der Vorteil daran ist, dass eine Priorisierung systemweit, also zwischen voneinander unabhängigen Kommunikationsteilnehmern bereitgestellt werden kann, ohne dass eine zentrale Steuervorrichtung benötigt ist.

Das bereitgestellte Verfahren kann etwa bestehende Verfahren erweitern, um zum Zugriff auf das Übertragungsmedium Prioritäten systemweit durchzusetzen. Dadurch ist es möglich, dass Datenpakete eines ersten Kommunikationsteilnehmers mit hoher Priorität bevorzugt übertragen werden können und sendebereite Pakete anderer Teilnehmer von diesen selbstständig oder freiwillig zurückgehalten werden.

Für Echtzeitsysteme wie z.B. Steuerungs- und Reglungssysteme im Fahrzeug können sich dadurch Vorteile ergeben. Für echtzeitrelevante Daten kann in einigen Beispielen beispielsweise eine maximal zulässige Latenz eingehalten werden. Es wird daher ein Zugriffsverfahren bereitgestellt, durch das eine Wahrscheinlichkeit erhöht wird, dass Pakete einer höheren Priorität auch bei hoher Auslastung des Netzwerkes innerhalb einer vorgeschriebenen Zeit zugestellt werden können (Einhaltung einer "worst case" oder vorgeschriebenen Latenz kann ermöglicht werden).

In einer vorteilhaften Umsetzung des Verfahrens geht die PHY-Komponente von der Annahme aus, dass die Prioritäten im nächsten Kommunikationszyklus identisch mit denen im letzten Zyklus sind. Diese Annahme trifft vor allem dann zu, wenn zu übertragene Nachrichten zur Übertragung in mehrere kleinere Pakete aufgeteilt werden. Mit anderen Worten, wenn ein zweiter Kommunikationsteilnehmer in einem ersten Kommunikationszyklus ein Datenpaket sendet, aus dem ein hoher Prioritätswert ermittelt wird, dann kann angenommen werden, dass der zweite Kommunikationsteilnehmer auch in einem zweiten Kommunikationszyklus ein Datenpaket mit derselben hohen Priorität sendet. Falls der erste Kommunikationsteilnehmer im zweiten Kommunikationszyklus ein Paket geringer Priorität zum Senden bereithält, so kann der erste Kommunikationsteilnehmer auf das Senden im zweiten Kommunikationszyklus verzichten. Auf diese Weise kann vorteilhafterweise der zweite oder ein weiterer Kommunikationsteilnehmer dann, wenn er im Gegensatz zu anderen Kommunikationsteilnehmern Datenpakete hoher Priorität zum Versenden bereithält, diese unverzüglich über den geteilten Übertragungskanal senden, da andere Kommunikationsteilnehmer die Datenpakete mit geringerer Priorität zum Senden bereithalten in einem jeweiligen Kommunikationszyklus auf das Senden dieser Datenpakete mit niedrigerer Priorität verzichten. Ein so bereitgestelltes Arbitrierungsverfahren ist in anderen Worten durch eine freiwillige Einschränkung des Sendens von Datenpaketen niedrigerer Priorität ermöglicht. Falls der zweite Kommunikationsteilnehmer im zweiten Kommunikationszyklus jedoch ein Datenpaket versendet, aus welchem der erste Kommunikationsteilnehmer einen niedrigeren Prioritätswert ermittelt, so kann der erste Kommunikationsteilnehmer auch im zweiten Kommunikationszyklus sein Datenpaket mit niedrigerer Priorität versenden, da in diesem Fall die Priorität oder Wichtigkeit der Datenpakete beider Kommunikationsteilnehmer gleich hoch ist.

In einer Weiterbildung des erfindungsgemäßen Verfahrens ist vorgesehen, dass ein Speichern der jeweils zuletzt ermittelten, unterschiedlichen Kommunikationsteilnehmern zugeordneten Prioritätswerte aus Datenpaketen unterschiedlicher Kommunikationsteilnehmer vorgenommen wird. Mit anderen Worten, die ermittelten Prioritätswerte der anderen Kommunikationsteilnehmer können etwa in der PHY-Komponente gespeichert werden. Beispielsweise können aus den ermittelten empfangenen Datenpaketen die jeweiligen Prioritätswerte ermittelt werden und die übrigen Daten der Datenpakete gelöscht werden, falls diese nicht an den empfangenden Kommunikationsteilnehmer gerichtet sind. Dadurch kann vorteilhafterweise eine gespeicherte Datenmenge reduziert werden. In einem anderen Ausführungsbeispiel ist es möglich, dass nur der höchste ermittelte Prioritätswert gespeichert wird. Wenn beispielsweise von einem Datenpaket eines zweiten Kommunikationsteilnehmers ein Prioritätswert 5 ermittelt wird und von einem darauf folgend empfangenen Datenpaket eines dritten Kommunikationsteilnehmers ein Prioritätswert 7 ermittelt wird, so kann der Prioritätswert 5 durch den Prioritätswert 7 ersetzt oder überschrieben werden. Auf diese Weise ist es vorteilhafterweise ausreichend, nur einen einzigen Prioritätswert zu speichern um das Verfahren durchzuführen. Insbesondere wird dabei berücksichtigt, dass es in einigen Fällen irrelevant sein kann, welcher der weiteren Kommunikationsteilnehmer Datenpakete einer höheren Priorität zum Senden bereithält.

In einer Weiterbildung des Verfahrens wird das eigene Datenpaket (etwa das des ersten Kommunikationsteilnehmers) in Abhängigkeit von dem höchsten einem weiteren Kommunikationsteilnehmer zugeordneten Prioritätswert gesendet, der ermittelt aus jeweiligen Datenpaketen von verschiedenen Kommunikationsteilnehmern gespeichert ist. Auf diese Weise kann das Verfahren vorteilhaft realisiert werden, indem wie zuvor beschrieben allein der höchste ermittelte Prioritätswert gespeichert und verwendet wird. In dem Fall, dass alle Kommunikationsteilnehmer, die an einer Kommunikation über den geteilten Übertragungskanal teilnehmen den jeweils höchsten Prioritätswert verwenden, kann der Übertragungskanal in einer priorisierten Reihenfolge nach der Priorität der jeweiligen Kommunikationsteilnehmer diesen bereitgestellt werden. Auf diese Weise wird der Übertragungskanal zwischen den Kommunikationsteilnehmern selbstständig gemäß der Priorität ihrer zu sendenden Datenpakete aufgeteilt.

Eine Weiterbildung des erfindungsgemäßen Verfahrens umfasst ein Vergleichen des einem weiteren Kommunikationsteilnehmer zugeordneten Prioritätswertes mit einem dem ersten Kommunikationsteilnehmer zugeordneten ersten Prioritätswert, wobei das Datenpaket vom ersten Kommunikationsteilnehmer gesendet wird, falls der erste Prioritätswert zumindest so hoch ist wie der höchste einem weiteren Kommunikationsteilnehmer zugeordnete Prioritätswert. Mit anderen Worten, der erste Kommunikationsteilnehmer vergleicht den Prioritätswert des Datenpaketes, das bei diesem zum Senden bereitsteht mit einem Prioritätswert eines weiteren Kommunikationsteilnehmers. Beispielsweise hat der erste Kommunikationsteilnehmer zuvor den vom zweiten Kommunikationsteilnehmer empfangenen Prioritätswert als den höchsten abgespeichert. Falls das Vergleichen ergibt, dass der Prioritätswert des ersten Kommunikationsteilnehmers so hoch ist wie der des zweiten Kommunikationsteilnehmers kann der erste Kommunikationsteilnehmer das Datenpaket versenden. Wenn in diesem Fall die Werte der Prioritäten der Kommunikationsteilnehmer gleich bleiben, kann beispielsweise der erste Kommunikationsteilnehmer abwechselnd mit dem zweiten Kommunikationsteilnehmer Datenpakete versenden. Der Vorteil dabei ist, dass auf diese Weise die beiden Kommunikationsteilnehmer, die wichtigere Datenpakete zum Versenden bereithalten, diese ohne zeitliche Verzögerung durch unwichtigere Datenpakete je abwechselnd versenden können.

In einer Weiterbildung des Verfahrens wird der erste Prioritätswert aus einem zuletzt vom ersten Kommunikationsteilnehmer über den geteilten Übertragungskanal gesendeten Datenpaket ermittelt. Mit anderen Worten, der erste Kommunikationsteilnehmer ermittelt seinen eigenen Prioritätswert auf die gleiche Weise, wie er auch die Prioritätswerte der weiteren Kommunikationsteilnehmer ermittelt. Der Vorteil daran kann sein, dass die Ermittlung besonders einfach und ohne weitere technische Veränderungen am ersten Kommunikationsteilnehmer durchgeführt werden kann. In dieser Weiterbildung kann beispielsweise vorgesehen sein, dass der erste Prioritätswert zusätzlich zu einem höchsten Prioritätswert der weiteren Kommunikationsteilnehmer abgespeichert wird. Auf diese Weise kann stets verglichen werden, ob der erste Prioritätswert geringer oder zumindest so hoch wie der höchste Prioritätswert ist. In Abhängigkeit davon kann ein Datenpaket vom ersten Kommunikationsteilnehmer gesendet oder zurückgehalten werden.

In einer Weiterbildung des Verfahrens wird der erste Prioritätswert nach einer vorbestimmten Anzahl gesendeter Datenpakete in einem separaten Datenpaket auf den geteilten Übertragungskanal gesendet. Ein separates Datenpaket kann ein solches Datenpaket sein, das ausschließlich einen Prioritätswert, z.B. den ersten Prioritätswert, enthält. Im Gegensatz zu einem zuvor beschriebenen Datenpaket, in dem der Prioritätswert neben weiteren Informationsdaten enthalten sein kann, kann ein separates Datenpaket besonders klein sein. Beispielsweise kann es eine Datengröße von 3 Bit aufweisen, wenn Prioritätswerte zwischen null und sieben bereitgestellt werden. Es kann auch lediglich eine Datengröße von 1 Bit aufweisen, wenn Prioritätswerte von Null und Eins bereitgestellt werden. Insbesondere können auch alle weiteren Kommunikationsteilnehmer nach der vorbestimmten Anzahl gesendeter Datenpakete jeweilige separate Datenpakete versenden. Die vorbestimmte Anzahl gesendeter Datenpakete kann beispielsweise so gewählt werden, dass das separate Datenpaket, bzw. alle separaten Datenpakete, nach jedem über den Übertragungskanal gesendeten Datenpaket gesendet wird. In diesem Beispiel kann zunächst beispielsweise ein zweiter Kommunikationsteilnehmer ein reguläres Datenpaket versenden und im Anschluss daran können der erste Kommunikationsteilnehmer und alle weiteren Kommunikationsteilnehmer separate Datenpakete versenden, um dadurch den jeweils anderen Kommunikationsteilnehmern den Prioritätswert ihres zum Senden bereitstehenden Datenpaketes mitzuteilen. Der Vorteil daran ist, dass im Fall, wenn einem Kommunikationsteilnehmer ein Datenpaket mit hoher Priorität zur Verfügung gestellt wird, dieser nicht erst einen gesamten Kommunikationszyklus abwarten muss, bis er das Datenpaket versenden kann. Der Vorteil daran ist, dass auf diese Weise sehr wichtige Datenpakete besonders schnell versendet werden können und beispielsweise ein Modus, in dem nur ein Kommunikationsteilnehmer Datenpakete sendet, unterbrochen werden kann, noch bevor alle Datenpakete hoher Priorität des Kommunikationsteilnehmers gesendet sind.

Die vorbestimmte Anzahl gesendeter Datenpakete kann in anderen Ausführungsbeispielen so gewählt werden, dass die separaten Pakete jeweils nach einem kompletten Sendezyklus oder nach einem halben Sendezyklus oder nach einer vorbestimmten Anzahl von Sendezyklen, beispielsweise zwei oder drei Sendezyklen gesendet werden können. Die vorbestimmte Anzahl kann beispielsweise auch adaptiv eingestellt werden, beispielsweise kann in einer bestimmten Situation, in der Kommunikationsteilnehmer häufig Datenpakete wurde hoher Priorität versenden das separate Datenpaket nach jedem Datenpaket gesendet werden und in einer Situation, in der nur unregelmäßig Datenpakete hoher Priorität versendet werden das separate Datenpaket nach einem Sendezyklus versendet werden. Die vorbestimmte Anzahl kann beispielsweise auch in Abhängigkeit von einer Auslastung des Übertragungskanals adaptiv angepasst werden.

In einer Weiterbildung des Verfahrens wird in dem separaten Datenpaket derjenige erste Prioritätswert versendet, der zu einem Datenpaket korrespondiert, das in einer Warteschlange von zu sendenden Datenpaketen vom ersten Kommunikationsteilnehmer eine höchste Priorität hat. Der Vorteil daran ist, dass jeweils der aktuelle Prioritätswert versendet wird. Falls in einem zuvor gesendeten Datenpaket des ersten Teilnehmers ein Prioritätswert einen geringen Wert hat, das nächste gemäß der Warteschlange zu sendenden Datenpakete jeweils jedoch einen hohen Prioritätswert hat, so kann der erste Kommunikationsteilnehmer den weiteren Kommunikationsteilnehmern mitteilen, dass er ein wichtiges Datenpaket zum Senden bereithält.

In einer Weiterbildung des Verfahrens wird dazu der erste Prioritätswert aus einem vom ersten Kommunikationsteilnehmer empfangenen Informationssignal ermittelt, wobei das Informationssignal von einer Vorrichtung des ersten Kommunikationsteilnehmers bereitgestellt ist, die ebenfalls die zu sendenden Datenpakete bereitstellt. Beispielsweise können Datenpakete von einer ersten Vorrichtung des ersten Kommunikationsteilnehmers versendet werden, wobei die Datenpakete von einer zweiten Vorrichtung des ersten Kommunikationsteilnehmers der ersten Vorrichtung bereitgestellt werden. Die zweite Vorrichtung kann der ersten Vorrichtung durch das Informationssignal denjenigen Prioritätswert mitteilen, den das als nächstes zu sendende Datenpaket aufweist. Dadurch kann vorteilhafterweise beispielsweise in dem separaten Datenpaket der jeweils aktuelle Prioritätswert versendet werden.

Ein Informationssignal kann dabei auch ein solches Datenpaket sein, das als nächstes vom ersten Kommunikationsteilnehmer versendet werden soll. Dabei kann die erste Vorrichtung des ersten Kommunikationsteilnehmers von der zweiten Vorrichtung das zu sendende Datenpaket anfordern, ohne es jedoch über den Übertragungskanal zu versenden. Um das Datenpaket als Informationssignal zu nutzen, kann eine Übermittlung von der zweiten Vorrichtung auf die erste Vorrichtung noch vor einem regulären Abschluss der Übermittlung des Datenpakets an die erste Vorrichtung von der ersten Vorrichtung abgebrochen werden. Mit anderen Worten, die Übermittlung kann zum Beispiel bei der Hälfte oder nach einer Übermittlung von 10% abgebrochen werden. In diesem Fall kann es möglich sein, dass die zweite Vorrichtung das Datenpaket weiterhin als das als das nächste zu versendende Datenpaket bereithält und gleichzeitig die erste Vorrichtung aus dem zum Teil übermittelten Datenpaket den ersten Prioritätswert ermitteln kann. Somit kann vorteilhafterweise ein unvollständiges Übermitteln eines Datenpaketes in einer internen Übermittlung des ersten Kommunikationsteilnehmers genutzt werden, um das Informationssignal bereitzustellen. Dadurch kann das Verfahren verbessert werden.

In einer Weiterbildung des Verfahrens ist vorgesehen, dass auf ein Senden eines Datenpakets vom ersten Kommunikationsteilnehmer innerhalb eines dafür vorgesehenen Zeitrahmens verzichtet wird, falls der erste Prioritätswert geringer ist als der einem weiteren Kommunikationsteilnehmer zugeordnete Prioritätswert. Falls der erste Kommunikationsteilnehmer also einen Prioritätswert eines weiteren Kommunikationsteilnehmers ermittelt, der höher ist als sein eigener erste Prioritätswert, verzichtet der erste Kommunikationsteilnehmer so lange auf das Senden des Datenpakets, bis sein eigener erste Kommunikation Prioritätswert zumindest so hoch ist wie der höchste Prioritätswert eines weiteren Kommunikationsteilnehmers. Dies gilt in gleicher Weise (ebenso wie die weiteren beschriebenen Weiterbildungen des Verfahrens) auch für die weiteren Kommunikationsteilnehmer. Wenn beispielsweise der zweite Kommunikationsteilnehmer ermittelt, dass der ihm zugeordnete Prioritätswert geringer ist als derjenige Prioritätswert, die den der zweite Kommunikationsteilnehmer aus einem Datenpaket des ersten Kommunikationsteilnehmers ermittelt hat, verzichtet der zweite Kommunikationsteilnehmer auf das Senden eines Datenpakets, solange bis er ermittelt, dass andere Kommunikationsteilnehmer wieder Datenpakete senden, deren Priorität gleich oder geringer seiner eigenen Priorität ist.

In einer Weiterbildung des Verfahrens sendet der erste Kommunikationsteilnehmer ein Datenpaket dann, falls ein weiterer Kommunikationsteilnehmer, der in einem vorangehenden Kommunikationszyklus ein Datenpaket eines Prioritätswertes gesendet hat, der höher als der erste Prioritätswert ist, in einem dem weiteren Kommunikationsteilnehmer zugeordneten Zeitschlitz kein Datenpaket sendet. Es kann also sein, dass etwa in mehreren hintereinander folgenden Sendezyklen oder Übertragungszyklen allein einer der weiteren Kommunikationsteilnehmer, etwa der zweite Kommunikationsteilnehmer, Datenpakete hoher Priorität, etwa der Priorität 7, versendet, da die anderen Kommunikationsteilnehmer lediglich Datenpakete mit geringerer Priorität bereithalten. Der erste Kommunikationsteilnehmer beobachtet den Sendezeitraum des zweiten Kommunikationsteilnehmers. Beispielsweise kann der zweite Kommunikationsteilnehmer mit dem Senden von Datenpaketen aufhören, wenn er eine Nachricht vollständig versendet hat. In diesem Fall kann der erste Kommunikationsteilnehmer registrieren, dass der zweite Kommunikationsteilnehmer sein Sendezeitfenster nicht nutzt. Falls dies der Fall ist, kann der erste Kommunikationsteilnehmer ein Datenpaket senden. Der erste Kommunikationsteilnehmer kann sein Datenpaket insbesondere auch dann senden, wenn der maximale, zuletzt vom ersten Kommunikationsteilnehmer ermittelte Prioritätswert höher ist, als sein eigener, erster Prioritätswert. Der Vorteil daran ist, dass durch die Weiterbildung beispielsweise ein Sendebetrieb wiederaufgenommen werden kann, in dem Datenpakete niedrigerer Priorität versendet werden, nachdem in einem anderen Sendebetrieb ein Kommunikationsteilnehmer aufgrund der Dringlichkeit seiner Nachricht priorisiert wurde.

In einer Weiterbildung des Verfahrens wird als der geteilte Übertragungskanal ein Kommunikationsbus eines Kraftfahrzeugs bereitgestellt. Kommunikationsteilnehmer können in diesem Fall beispielsweise Steuergeräte mit verschiedenen Funktionen sein, die im Kraftfahrzeug oder einem Fahrzeug, beispielsweise einem Lastkraftwagen oder einem Motorrad, bereitgestellt sind. Es kann notwendig sein, dass diese Steuergeräte miteinander kommunizieren, um beispielsweise die Ausführung ihrer Funktionen aufeinander abzustimmen. Der Vorteil an der Weiterbildung ist, dass diese Kommunikation über einen Kommunikationsbus gemäß dem Verfahren so ausgeführt werden kann, dass der Kommunikationsbus besonders effizient genutzt wird. Effizient bedeutet, dass der Kommunikationsbus durch das Verfahren denjenigen Publikationsteilnehmern bereitgestellt wird, die jeweils eine besonders wichtige Nachricht in einem Datenpaket mit einer jeweils hohen Priorität zum Versenden bereithalten. Der Vorteil an dem Kommunikationsbus kann weiterhin sein, dass auch Sensoren des Kraftfahrzeugs verfahrensgemäß mit den Steuergeräten oder anderen Sensoren kommunizieren können. Insbesondere Informationen von Sensoren können dabei bei einem fahrenden Kraftfahrzeug hohe Priorität haben.

Ein weiterer Aspekt der Erfindung betrifft ein Steuergerät, das zum Steuern eines Sendens von Datenpaketen gemäß einem der vorhergehenden Verfahren ausgebildet ist. Das Steuergerät weist dabei einen Maximumfinder auf, der dazu eingerichtet ist, aus einer vorbestimmten Anzahl von empfangenen Datenpaketen einen maximalen externen Prioritätswert zu ermitteln und abzuspeichern. Der Maximumfinder eines ersten Kommunikationsteilnehmers kann zum Beispiel dazu verwendet werden, denjenigen Prioritätswert zu ermitteln, mit dem der Prioritätswert des ersten Kommunikationsteilnehmers verglichen wird.

Das Steuergerät ist zum Senden zumindest eines Datenpakets von einem beispielsweise ersten Kommunikationsteilnehmer über einen mit zumindest einem weiteren Kommunikationsteilnehmer geteilten Übertragungskanal ausgebildet. Das Steuergerät ist weiterhin zum Empfangen von dem beispielsweise ersten Kommunikationsteilnehmer von zumindest einem Datenpaket von dem zumindest einen weiteren Kommunikationsteilnehmer über den geteilten Übertragungskanal und zum Ermitteln eines dem weiteren Kommunikationsteilnehmer zugeordneten Prioritätswertes aus dem Datenpaket ausgebildet. Das Steuergerät ist weiterhin zum Senden des Datenpakets von dem ersten Kommunikationsteilnehmer über den geteilten Übertragungskanal in Abhängigkeit von dem Prioritätswert ausgebildet.

In einer Weiterbildung des Steuergeräts weist dieses einen Komparator auf, der dazu ausgebildet ist, einen eigenen Prioritätswert mit einem externen Prioritätswert zu vergleichen. Der eigene Prioritätswert ist beispielsweise der erste Prioritätswert, wenn das Steuergerät dem ersten Kommunikationsteilnehmer bereit zugeordnet ist oder wenn das Steuergerät ein Bestandteil oder eine Vorrichtung des ersten Kommunikationsteilnehmers ist. Der externe Prioritätswert ist beispielsweise ein einem weiteren Kommunikationsteilnehmer zugeordnete Prioritätswert. Beispielsweise ist der externe Prioritätswert der höchste Prioritätswert, der aus Datenpaketen der weiteren Kommunikationsteilnehmer vom ersten Kommunikationsteilnehmer ermittelt ist. Der Vorteil am Komparator ist, dass das Steuergerät durch einen Vergleich bestimmen kann, ob ein Datenpaket gesendet wird oder ob dieses solange zurückgehalten wird, bis der eigene Prioritätswert zumindest so hoch ist wie der externen Prioritätswert.

Ein weiterer Aspekt der Erfindung betrifft ein System mit zumindest einem Steuergerät gemäß dem vorherigen Steuergerät, wobei das System zumindest eine zu einem Steuergerät korrespondierende Datensteuerungsvorrichtung aufweist, die dazu ausgebildet ist, dem Steuergerät Datenpakete zum Senden bereitzustellen, wobei die Datensteuerungsvorrichtung ferner dazu ausgebildet ist, ein Informationssignal mit einem dem Steuergerät zugeordneten Prioritätswert an das korrespondierende Steuergerät zu senden.

Ein weiterer Aspekt der Erfindung betrifft ein Kraftfahrzeug mit einem System gemäß dem zuvor beschriebenen System und/oder mit zumindest einem Steuergerät gemäß einem zuvor beschriebenen Steuergerät, wobei der geteilte Übertragungskanal durch einen Kommunikationsbus des Kraftfahrzeugs ausgebildet ist.

Zu der Erfindung gehören auch die Weiterbildungen des erfindungsgemäßen Steuergeräts, Systems und Kraftfahrzeugs, die eines oder mehrere Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Steuergeräts, Systems beziehungsweise Kraftfahrzeugs hier nicht noch einmal beschrieben, sondern gelten ebenso für diese als offenbart.

Im Nachfolgenden werden nunmehr Ausführungsbeispiele der vorliegenden Erfindung unter Bezugnahme auf die beigefügten Zeichnungen näher beschrieben. Dazu zeigt:
- Fig. 1: ein Beispiel eines Verfahrens zum Senden eines Datenpakets;
- Fig. 2: ein Beispiel mit Kommunikationsteilnehmern an einem geteilten Übertragungskanal;
- Fig. 3: ein Beispiel eines Sendeprotokolls mit Datenpaketen derselben Priorität;
- Fig. 4: ein Beispiel eines Sendeprotokolls mit Datenpaketen verschiedener Priorität;
- Fig. 5: ein Ausführungsbeispiel eines Systems;
- Fig. 6: ein Ausführungsbeispiel eines Systems; und
- Fig. 7: ein Ausführungsbeispiel eines Systems.

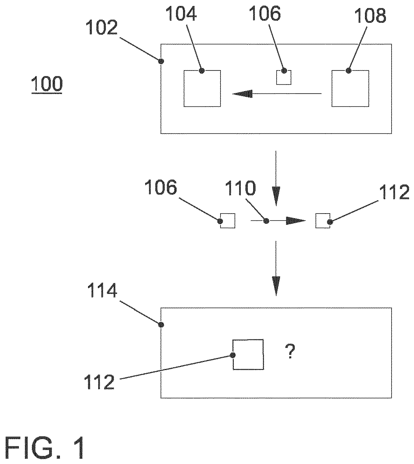

Fig. 1 zeigt ein Verfahren 100 zum Senden eines Datenpakets. Das Verfahren 100 umfasst ein Empfangen 102 von einem ersten Kommunikationsteilnehmer 104 von einem Datenpaket 106 von einem weiteren Kommunikationsteilnehmer 108. Das Datenpaket 106 wird verwendet zum Ermitteln 110 eines Prioritätswertes 112, der dem weiteren Kommunikationsteilnehmer 108 zugeordnet wird. Der erste Kommunikationsteilnehmer 104 kann also einen Prioritätswert eines Datenpaketes 106, dass der erste Kommunikationsteilnehmer von einem weiteren Kommunikationsteilnehmer empfangen hat ermitteln. Das Verfahren 100 umfasst weiterhin ein Senden 114 eines Datenpaketes vom ersten Kommunikationsteilnehmer 104 in Abhängigkeit von dem Prioritätswert 112.

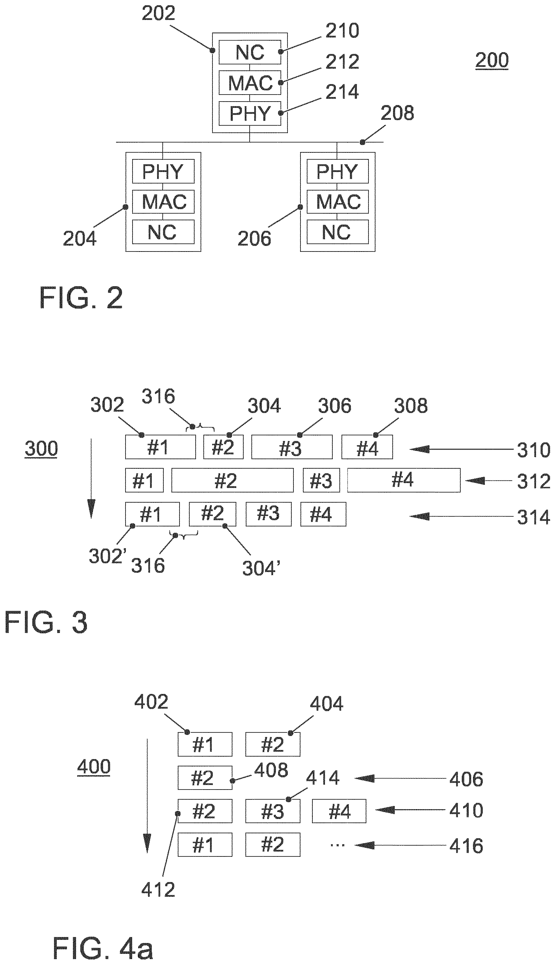

Fig. 2 zeigt ein Beispiel 200 mit Kommunikationsteilnehmern 202, 204, 206 an einem geteilten Übertragungskanal 208. die Kommunikationsteilnehmer 202, 204, 206 sind beispielsweise Steuergeräte eines Kraftfahrzeugs und der Übertragungskanal 208 ist beispielsweise ein Kommunikationsbus des Kraftfahrzeugs. Ein Kommunikationsteilnehmer, beispielsweise der Kommunikationsteilnehmer 202 kann etwa einen Mikrokontroller 210, eine MAC-Komponente 212 und eine PHY-Komponente 214 aufweisen. Die MAC-Komponente 212 kann beispielsweise ein Senden von Datenpaketen über den Übertragungskanal 208 Steuern, wobei der PHY-Komponente 214 zu sendenden Datenpakete von der MAC-Komponente 212 bereitgestellt werden. Die MAC-Komponente 212 kann der PHY-Komponente 214 zu sendenden Datenpakete des Kommunikationsteilnehmers 202 in Abhängigkeit von einer Priorität zum Senden über den Übertragungskanal 208 bereitstellen. Wenn der Kommunikationsteilnehmer 202 beispielsweise Datenpakete verschiedener Priorität zum Senden bereithält, so können zunächst die Datenpakete als erstes gesendet werden, die die höchste Priorität aufweisen.

Fig. 3 zeigt ein Beispiel eines Sendeprotokolls 300 mit Datenpaketen von einer selben Priorität. Im Beispiel sind vier Kommunikationsteilnehmer #1, #2, #3 und #4 vorgesehen, die jeweils hintereinander Datenpakete 302, 304, 306 und 308 in jeweiligen, ihnen zugeordneten Zeitfenstern senden. In einem ersten Sendezyklus 310 sendet also ein erster Kommunikationsteilnehmer das Datenpaket 302, darauf folgend ein zweiter Kommunikationsteilnehmer das Datenpaket 304, dann ein dritter Kommunikationsteilnehmer das Datenpaket 306 und schließlich ein vierter Kommunikationsteilnehmer das Datenpaket 308. Jeder der Kommunikationsteilnehmer ermittelt aus den Datenpaketen einen jeweiligen Prioritätswert. Da in diesem Beispiel des Sendeprotokolls 300 alle Datenpakete denselben Prioritätswert aufweisen, senden die vier Kommunikationsteilnehmer auch in einem zweiten Sendezyklus 312 und in einem dritten Sendezyklus 314 jeweils hintereinander, das bedeutet etwa gleichmäßig verteilt, ihre jeweiligen Datenpakete. Die Datenpakete können dabei eine unterschiedliche Länge aufweisen. Beispielsweise kann eine Länge des Datenpaket 302' des ersten Kommunikationsteilnehmers im dritten Sendezyklus 314 geringer sein als die Länge des zuvor gesendeten Datenpaket 302.der zweite Kommunikationsteilnehmer kann sein entsprechendes Datenpaket 304 bzw. 304' dann senden, wenn nach dem Senden des Datenpakets 302 bzw. 302' des ersten Kommunikationsteilnehmers eine vordefinierte Sendepause 316 abgewartet wurde.

In der Abbildung 3 sind die verschiedenen Sendezeitfenster nebeneinander angeordnet (die den Kommunikationsteilnehmern #1 bis #4 zugeordnet sind). Eine Zeile entspricht einem Kommunikationszyklus. In der Abbildung sind drei Kommunikationszyklen dargestellt. Zwischen den Sendezeitfenstern ist eine Pause definierter Länge, an der erkannt werden kann, dass die vorherige Sendung abgeschlossen ist. Die Dauer eines Sendezeitfensters hängt von der Menge der übertragenen Daten ab. Wenn ein Netzwerkteilnehmer keine Daten versendet, treten mehrere Pausen hintereinander auf. Diese Art des Zugriffsverfahrens wird als Fair bezeichnet, weil alle Teilnehmer des Netzwerkes die gleiche Chance haben Pakete zu senden. Dies kann sinnvoll sein, wenn alle Kommunikationsteilnehmer Datenpakete einer selben Priorität versenden.

Fig. 4a zeigt ein Beispiel eines Sendeprotokolls 400 mit Datenpaketen verschiedener Priorität. Beispielsweise weist ein Datenpaket 402 des ersten Kommunikationsteilnehmers eine geringe Priorität auf und ein Datenpaket 404 des zweiten Kommunikationsteilnehmers eine höchste Priorität auf. Die höchste Priorität ist dabei insbesondere höher als die Prioritäten der von den Kommunikationsteilnehmern #3, #4 und #1 zu sendenden Datenpakete. Daher setzen in einem Kommunikationszyklus 406 die weiteren Kommunikationsteilnehmer mit dem Senden ihre Datenpakete aus, sodass der zweite Kommunikationsteilnehmer ein weiteres wichtiges Datenpaket 408 mit einer hohen Priorität unverzüglich senden kann. Der Sendezyklus wird dadurch gekürzt, dass lediglich die vordefinierten Sendepausen abgewartet werden müssen, jedoch keine Sendezeitfenster zwischen den Sendepausen (die etwa in Fig. 3 zwischen jedem Datenpaket vorhanden sein können) von anderen Kommunikationsteilnehmern genutzt werden. In einem darauf folgenden Sendezyklus 410 weist ein Datenpaket 412 des zweiten Kommunikationsteilnehmers eine geringe Priorität auf. Diese wird zumindest vom dritten Kommunikationsteilnehmer ermittelt. Da die Priorität des dritten Kommunikationsteilnehmers nunmehr genauso hoch ist wie die des zweiten Kommunikationsteilnehmers, sendet der dritte Kommunikationsteilnehmer im Sendezyklus 410 ein Datenpaket 414. Ein Sendezyklus 416 kann beispielsweise dann, wenn die Prioritäten der Datenpakete aller Kommunikationsteilnehmer gleich sind, dem Sendezyklus 310 des zuvor beschriebenen Sendeprotokolls 300 entsprechen. Auf diese Weise ist gezeigt, wie aufgrund der übertragenen Prioritätswerte zwischen verschiedenen Sendeprotokollen gewechselt werden kann und einem Kommunikationsteilnehmer mit Datenpaketen einer hohen Priorität ein Vorzugsrecht zum Senden seiner Datenpakete durch eine dezentrale Entscheidung der weiteren Kommunikationsteilnehmers gegeben werden kann.

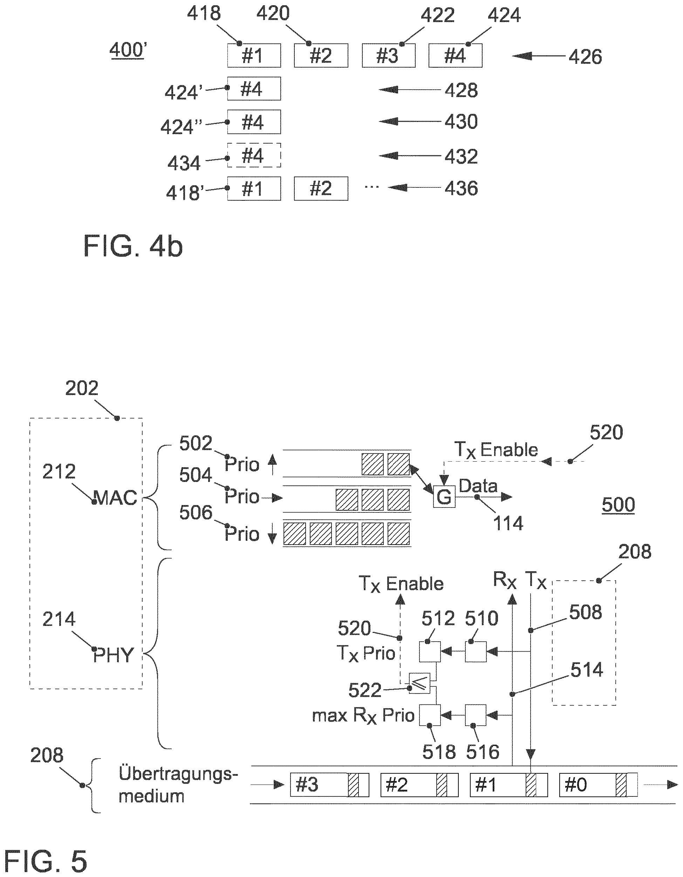

Fig. 4b zeigt ein Beispiel eines Sendeprotokolls 400'. In einem ersten Kommunikationszyklus 426 senden vier Kommunikationsteilnehmer hintereinander ihre jeweiligen Datenpakete 418, 420, 422, 424. Das Datenpaket 424 kann eine höhere Priorität aufweisen als die übrigen Datenpakete 418, 420, 422. Daher setzen Kommunikationsteilnehmer #1, #2, und #3 in den Sendezyklen 428, 430 und 432 aus, während in den Sendezyklen 428, 430 lediglich Kommunikationsteilnehmer #4 sendet. In Kommunikationszyklus 430 ist die Nachricht von #4 mit dem Senden des Datenpakets 424" abgeschlossen. Kommunikationsteilnehmer #1, #2, und #3 senden dennoch in Zyklus 432 kein Datenpaket, da sie noch den Prioritätswert 7 von #4 abgespeichert haben. Da Kommunikationsteilnehmer #4 jedoch in Zyklus 432 kein Datenpaket innerhalb eines ihm zugeordneten Zeitfensters 434 oder Zeitschlitzes sendet, beginnt Kommunikationsteilnehmer #1 in Zyklus 436 wieder damit, Datenpakete zu senden, etwa das Datenpaket 418'. Obwohl #1 noch den Prioritätswert 7 gespeichert hat, kann er dann wieder ein Datenpaket 418', das etwa den Prioritätswert 5 aufweist, senden, da er zuvor das Zeitfenster 434 des Kommunikationsteilnehmers #4 beobachtet hat und feststellen konnte, dass #4 keine weitere Nachricht mehr sendet. Auf diese Weise kann beispielsweise ein Sendemodus hoher mit Priorisierung in einen Sendemodus mit niedrigerer Priorisierung zurückgeführt werden, wenn eine hoch-priore Nachricht vollständig gesendet ist und der Kommunikationsteilnehmer, der die hoch-priore Nachricht gesendet hat, keine weiteren Datenpakete sendet.

Fig. 5 ein Ausführungsbeispiel eines Systems 500 mit einem ersten Kommunikationsteilnehmer 202, dessen MAC-Komponente 212 Datenpakete einer hohen Priorität 502 einer mittleren Priorität 504 und einer geringen Priorität 506 einer PHY-Komponente 214 bereitstellt. Die PHY-Komponente 214 empfängt aus einem Sendepfad 508 ein erstes Datenpaket 510, aus dem die erste Priorität 512 ermittelt wird. Der erste Prioritätswert 512 entspricht dabei dem Prioritätswert eines Datenpakets des Kommunikationsteilnehmers 202. Aus einem Empfangspfad 514 empfängt der erste Kommunikationsteilnehmer ein Datenpaket 516 eines weiteren Kommunikationsteilnehmers, der Datenpakete über den Übertragungskanal 208 versendet. Aus dem Datenpaket 516 ermittelt die PHY-Komponente 214 einen Prioritätswert 518. In einem Vergleich 522 kann beispielsweise ermittelt werden, dass der erste Prioritätswert 512 so groß ist wie der Prioritätswert 518. In diesem Fall kann die PHY-Komponente der MAC-Komponente in einem Freigabesignal 520 oder mitteilen, dass ein Datenpaket beispielsweise der hohen Priorität 512 gesendet werden kann. Aufgrund dieser Information kann das kann der Kommunikationsteilnehmer 202 ein Senden 114 eines Datenpaketes durchführen.

Es ist möglich, dass Datenpakete mit hoher Priorität bevorzugt übertragen werden können und sendebereite Pakete anderer Teilnehmer von diesen jeweils zurückgehalten werden. Der Teilnehmer 202 beobachtet also die Daten auf dem Übertragungskanal 208 und speichert etwa den höchsten beobachteten Prioritätswert 518 der letzten Kommunikationsrunde. Dies bedeutet: Wenn der Teilnehmer in einem Zeitfenster n senden darf, wertet er die Prioritätsinformationen aus den Zeitfenstern ab n+1 des letzten Kommunikationszyklus sowie die Zeitfenster bis n-1 des aktuellen Kommunikationszyklus aus. Der PHY 214 sendet sein Datenpaket nur dann, wenn die Priorität des eigenen Pakets genauso hoch oder höher ist als die höchste beobachtete Priorität eines anderen Kommunikationsteilnehmers. Wenn die Priorität 512 des eigenen Pakets geringer ist, verzichtet er auf das Recht zu Senden und blockiert dadurch nicht den gemeinsamen Kommunikationskanal 208 mit einem niedrig-prioren Paket. Der Vorteil daran, dass alle Teilnehmer im Netzwerk verfahrensgemäß Datenpakete senden liegt darin, dass Nachrichten mit hoher Priorität (die aus mehreren Datenpaketen bestehen) übertragen werden können, ohne dass sie von Paketen niedriger Priorität unterbrochen werden.

Das bisher beschriebene Verfahren ist in einem Ethernet System vergleichsweise einfach umzusetzen, da es nur ein Arbitrierungs-Verfahren innerhalb des PHY betrifft. Dabei sind an einer bestehenden PHY-Komponente nur geringe Änderungen nötig: Bereitstellen einer Funktionalität, um das 3-Bit Prioritätsfeld aus dem Datenstrom der empfangenen und sendenden Daten zu extrahieren (da gemäß IEEE 802.1Q die Information immer an der gleichen Position im Datenpaket steht, kann diese effizient ausgelesen werden); Funktionalität bereitstellen, um den Maximalwert aller empfangenen Pakete der des letzten Zyklus zu ermitteln und zu speichern; Funktionalität zum Speichern des Prioritätswertes des letzten gesendeten Pakets bereitstellen; Funktionalität bereitstellen, um dem MAC die Freigabe zum Senden zu entziehen wenn die eigene Priorität kleiner als ist als der empfangene Maximalwert, etwa durch ein Freigabesignal 520.

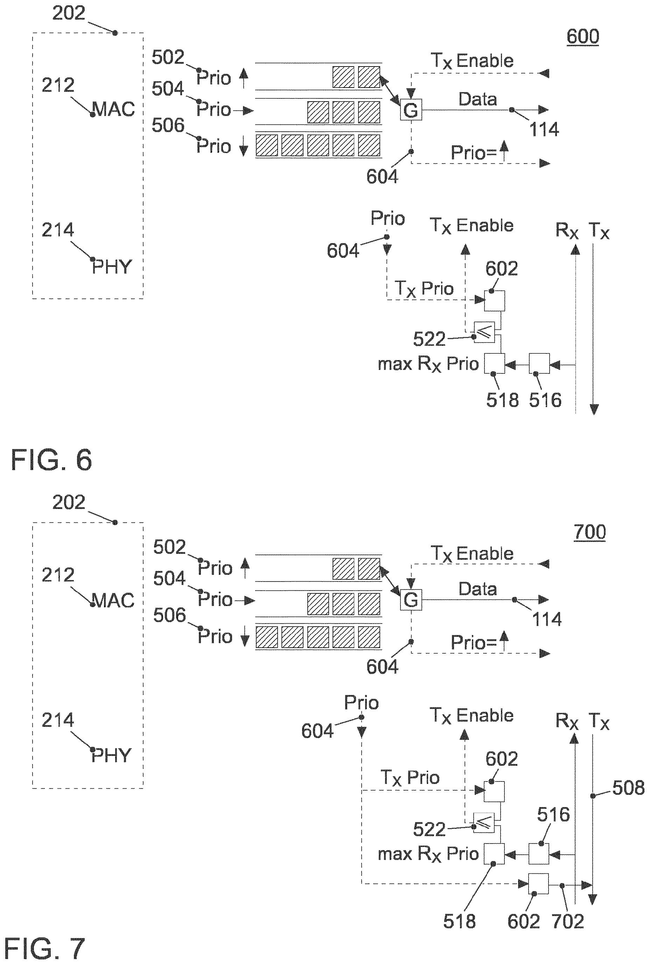

Fig. 6 zeigt ein Ausführungsbeispiel eines Systems 600. im Gegensatz zum System 500 wird ein erster Prioritätswert 602 der PHY-Komponente von der MAC-Komponente in einem Prioritätssignal 604 bereitgestellt. Der Kommunikationsteilnehmer 202 des Systems 600 ist also dazu ausgebildet, dass ein erster Prioritätswert eines vom Kommunikationsteilnehmer 202 zu sendenden Datenpaketes nicht aus einem gesendeten Datenpaket ermittelt werden muss, sondern durch das Prioritätssignal bereitgestellt werden kann. In einem Vergleichen 522 des ersten Prioritätswertes 602 und des Prioritätswertes 518 eines weiteren Kommunikationsteilnehmers kann beispielsweise ermittelt werden, dass der erste Prioritätswert 602 höher ist als der Prioritätswert 518, sodass ein Senden 114 eines Datenpaketes vom ersten Kommunikationsteilnehmer 202 ausgeführt werden kann.

Es ist in diesem Beispiel also vorgesehen, dass der MAC dem PHY eine Information über die Priorität des nächsten zu sendenden Frames zukommen lässt. Dadurch kann der PHY die Entscheidung nicht nur auf Grund des letzten gesendeten Paketes sondern aufgrund des aktuell anstehenden Pakets treffen. Diese Verbesserung bringt vor allem dann einen Vorteil, wenn ein Teilnehmer sowohl Pakete mit niedriger Priorität als auch Pakete mit hoher Priorität versendet, was ein häufig anzutreffendes Kommunikationsverhalten ist. Durch die Ausführung gemäß System 600 kann eine Latenz beim Senden des ersten hoch-prioren Pakets vermieden werden, da der PHY bereits über die Priorität des nächsten zum Senden bereitstehenden Datenpaketes informiert ist.

Dafür kann an einem bestehenden MAC eine Änderung erforderlich sein. Der Prioritäts-Scheduler übergibt mithilfe eines zusätzlichen Signals 604 die Priorität der nächsten sendebereiten Nachricht an den PHY noch bevor die eigentliche Übertragung der Daten stattfindet. Der PHY verwendet die Prioritätsinformation aus dem Signal anstelle der Prioritätsinformation aus der letzten gesendeten Nachricht. Es sind verschiedenen Verfahren möglich die Prioritätsinformation vom MAC an den PHY zu übertragen: Die Ethernet Spezifikation IEEE 802.3 sieht ein Serielles Kommunikationsinterface zwischen MAC und PHY vor. Mit Hilfe der Signale MDIO und MDCC kann der PHY auf interne Register des PHY zugreifen. Durch einen schreibenden Zugriff auf ein entsprechendes Register kann der MAC dem PHY die Prioritätsinformation mitteilen. Innerhalb des Datenstroms der MII Schnittstelle zwischen MAC und PHY (gemäß IEEE 802.3) können zusätzliche Informationen übertragen werden, die vom PHY empfangen und nicht auf das Übertragungsmedium gesendet werden. Dies kann z.B. vor oder nach der Übertragung einer Ethernet Nachricht erfolgen. Ein separates Interface zwischen MAC und PHY zur Übertragung der Prioritätsinformation kann bereitgestellt werden. Dieses kann beispielsweise ein 3-Bit parallel-Interface oder serielles Interface über einen separaten Anschluss sein.

In einem Ausführungsbeispiel ist es möglich, ein Informationssignal von der MAC-Komponente an die PHY-Komponente zu übermitteln, ohne dass dafür an einer bestehenden MAC-Komponente Änderungen vorgenommen werden müssten. Dazu kann es möglich sein, dass die PHY-Komponente der MAC-Komponente eine Sendeerlaubnis erteilt, ohne jedoch die Daten tatsächlich über den Übertragungskanal zu versenden. Daraufhin beginnt die MAC-Komponente damit, das nächste zu versendende Datenpaket an die PHY-Komponente zu übermitteln. Sobald die PHY-Komponente das Prioritätsfeld empfangen hat (welche immer an der gleichen Stelle, relativ weit vorn im Header positioniert sein kann), also ein derart großer Teil des Datenpakets übermittelt wurde, sodass die PHY-Komponente daraus den Prioritätswert des Datenpaketes ermitteln kann, bricht die PHY-Komponente die Übermittlung ab (mit anderen Worten, die PHY-Komponente entzieht der MAC-Komponente die Sendeerlaubnis, noch bevor das Datenpaket komplett übermittelt wurde). Da die MAC-Komponente den Frame oder das Datenpaket unvollständig an die PHY-Komponente übermittelt hat, bleibt das betroffene Datenpaket vorne in einer Warteschlange (bspw. der Sendequeue) der MAC-Komponente stehen und es wird beim nächsten Erteilen der Sendeerlaubnis erneut versucht, diesen Frame (dieses Datenpaket) komplett an die PHY-Komponente zu übermitteln. Der PHY-Komponente steht nach dem Abbruch des Übermittelns jedoch der Prioritätswert des nächsten sendebereiten Frames (des nächsten Datenpaketes) zur Verfügung. Damit kann die PHY-Komponente zum Beispiel einen von einem weiteren Kommunikationsteilnehmer ermittelten Prioritätswert vergleichen oder den gemäß dem Beispiel ermittelten Prioritätswert durch beispielsweise ein separates Datenpaket den weiteren Kommunikationsteilnehmern mitteilen.

Fig. 7 zeigt ein Ausführungsbeispiel eines Systems 700. System 700 kann als eine Weiterbildung des Systems 600 betrachtet werden, wobei das Prioritätssignal 604 nicht nur dazu genutzt wird, um die Priorität 602 in einem Vergleich 522 mit der Priorität 518 zu vergleichen, sondern auch um die Priorität 602 beispielsweise in einem separaten Datenpaket 702 über den Sendepfad 508 des Übertragungskanal 208 den weiteren Kommunikationsteilnehmern bereitzustellen.

Dadurch besitzt ein Netzwerkteilnehmer die Möglichkeit, einen Hinweis auf die Priorität der nächsten anstehenden Nachricht an die anderen oder weiteren Netzwerkteilnehmer zu übermitteln. Statt davon auszugehen, dass die Priorität einer Nachricht eines anderen Teilnehmers im aktuellen Kommunikationszyklus der Priorität im vergangenen Zyklus entspricht ist gemäß der Ausführung des Systems 700 ein Teilnehmer in der Lage, zusätzlich zur Priorität der aktuellen Nachricht die Priorität der voraussichtlich nächsten Nachricht zu übertragen. Dafür sendet der PHY eine zusätzliche Nachricht, etwa das separate Datenpaket 702, auf das Übertragungsmedium (Sendepfad 508) in dem er die Priorität der nächsten sendebereiten Nachricht überträgt. Es sind mehrere Verfahren vorstellbar, die Prioritätsnachricht zu übertragen: Direkt im Anschluss an die Übertragung einer Nachricht, innerhalb des gleichen Sende-Zeitfensters; In einem separaten Kommunikationszyklus, in dem die Netzwerkteilnehmer nur Prioritätsinformationen und keine Nutzdaten übertragen. Dieser Prioritäts-Kommunikationszyklus kann entweder zwischen zwei regulären Kommunikationszyklen erfolgen oder nach jeder regulären Nachricht eingefügt werden.

Die Größe der Prioritätsinformation ist mit etwa drei Bit sehr gering, d.h. ein separates Datenpaket 702 kann klein sein. Beim Einsatz des ersten Verfahrens entsteht dadurch nur eine sehr geringe zusätzliche Belastung für das Kommunikationsmedium, wohingegen ein Verfahren zum Senden eines Datenpakets erheblich verbessert werden kann.

Durch den Einsatz des Verfahrens kann die Vorhersagequalität verbessert werden, da der Netzwerkteilnehmer zu einem späteren Zeitpunkt die Priorität seiner anstehenden Nachricht übertragen kann. Ab effektivsten können Prioritäten durchgesetzt werden, wenn nach jeden regulären Zeitfenster ein solcher Kommunikationszyklus eingefügt wird. Durch den separaten Kommunikationszyklus entstehen jedoch zusätzliche Pausen zwischen den zusätzlichen Sendezeitfenstern. Wenn die Prioritätsinformationen sehr häufig gesendet werden sinkt dadurch die für Nutzdaten zur Verfügung stehende Bandbreite des Netzwerks.

Wenn während der Übertragung im MAC eine hoch-priore Nachricht eintrifft, kann der Netzwerkteilnehmer unmittelbar nach Abschluss Übertragung einen Hinweis auf die hohe Priorität kommunizieren. Die Netzwerkteilnehmer mit niedrigerer würden dadurch auf Senderecht verzichten und die hoch-priore Nachricht kann zeitnah gesendet werden.

Die vorliegende Anmeldung betrifft generell eine Arbitrierungsstrategie mittels einer PHY-Komponente. Die Anmeldung betrifft ein Verfahren, wie in einem System aus Strict Priority Scheduler und nachgelagertem Weighted Round Robin Scheduler die Priorisierung der durch den Strict Priority Scheduler "geschedulten" (geplanten) Elemente durchgesetzt werden kann.

Es kann vorteilhaft sein, ein 10 Mbit Ethernet für die Verwendung im Automobil zum Vernetzen von Fahrzeugkomponenten bereitzustellen. Für ein 10 Mbit Ethernet Physical Layer (PHY) in Elektronikarchitekturen im Fahrzeug kann eine Bustopologie mit diesem Physical Layer (PHY) ermöglicht sein. Dies macht gleichzeitig ein geeignetes Arbitrierungsverfahren erforderlich, welcher Teilnehmer zu welchem Zeitpunkt den Buszugriff erhält. Einige Arbitrierungsverfahren können jedem Teilnehmer oder Kommunikationsteilnehmer garantieren, dass er regelmäßig Zugriff auf den Bus erhält, indem sozusagen ein virtueller Staffelstab weitergereicht wird. Solche Verfahren können jedoch den Nachteil haben, dass durch ein Weighted (gewichtetes) Round Robin zwischen den Teilnehmern eine im automobilen Bereich notwendige Priorisierung von Botschaften unmöglich sein kann. Die Priorisierung von Botschaften kann erforderlich sein, um Botschaften, die sehr kurze Zustellungszeiten erfordern, bevorzugt im Netzwerk zu behandeln und damit vorgeschriebene Zustellungszeiten einhalten zu können. Durch das in dieser Anmeldung bereitgestellte Verfahren können vorgeschriebene Übertragungszeiten eingehalten werden. Somit kann das vorgestellte Verfahren ein dezentralisiertes Priorisieren bezüglich eines Sendens von Datenpaketen von unabhängigen Kommunikationsteilnehmern über einen geteilten Übertragungskanal ermöglichen.

Allgemein kann das Verfahren in allen vernetzten, elektronischen Steuergeräten eingesetzt werden. Der Vernetzungsbedarf von elektronischen Geräten, beispielsweise in einem Automobil oder Kraftfahrzeug, kann den Einsatz von 10 MBit Ethernet oder einer vergleichbaren Technologie nötig machen. Darüber hinaus kann über ein 10 MBit Ethernet auch eine Anbindung von Sensoren bereitgestellt werden (z.B. im Rahmen von Sensordatenfusion oder einer Mikrofonanbindung). Das Verfahren kann im Bereich der Industrie und der industriellen Automatisierungstechnik eingesetzt werden. Des Weiteren kann es im Bereich der Hausautomatisierungstechnik verwendet werden.

### Bezugszeichenliste

- 100: Verfahren
- 102: Empfangen
- 104: erster Kommunikationsteilnehmer
- 106: Datenpaket
- 108: weiterer Kommunikationsteilnehmer
- 110: Ermitteln
- 112: Prioritätswert
- 114: Senden
- 200: Beispiel
- 202: erster Kommunikationsteilnehmer
- 204: zweiter Kommunikationsteilnehmer
- 206: dritter Kommunikationsteilnehmer
- 208: Übertragungskanal
- 210: Mikrocontroller
- 212: MAC-Komponente
- 214: PHY-Komponente
- 300: Sendeprotokoll
- 302: Datenpaket eines ersten Kommunikationsteilnehmers
- 304: Datenpaket eines zweiten Kommunikationsteilnehmers
- 306: Datenpaket eines dritten Kommunikationsteilnehmers
- 308: Datenpaket eines vierten Kommunikationsteilnehmers
- 310: erster Kommunikationszyklus
- 312: zweiter Kommunikationszyklus
- 314: dritter Kommunikationszyklus
- 400: Sendeprotokoll
- 402: Datenpaket eines ersten Kommunikationsteilnehmers
- 404: Datenpaket eines zweiten Kommunikationsteilnehmers
- 406: Kommunikationszyklus
- 408: Datenpaket hoher Priorität
- 410: Kommunikationszyklus
- 412: Datenpaket geringer Priorität
- 414: Datenpaket eines dritten Kommunikationsteilnehmers
- 416: Kommunikationszyklus
- 500: System
- 502: hohe Priorität
- 504: mittlere Priorität
- 506: geringe Priorität
- 508: Sendepfad
- 510: erstes Datenpaket
- 512: erste Priorität
- 514: Empfangspfad
- 516: Datenpaket eines weiteren Kommunikationsteilnehmers
- 518: Prioritätswert
- 520: Freigabesignal
- 522: Vergleichen
- 600: System
- 602: erster Prioritätswert
- 604: Prioritätssignal
- 700: System
- 702: separates Datenpaket

## Patentansprüche

1. Verfahren (100) zum Senden zumindest eines Datenpakets von einem ersten Kommunikationsteilnehmer (104, 202) über einen mit zumindest einem weiteren Kommunikationsteilnehmer (108, 204, 206) geteilten Übertragungskanal (208), wobei Datenpakete von den Kommunikationsteilnehmern (104, 108, 202, 204, 206) gemäß einem Rundlauf-Verfahren über den geteilten Übertragungskanal (208) gesendet werden, das Verfahren (100) umfassend:
- Empfangen (102), von dem ersten Kommunikationsteilnehmer (202), von zumindest einem Datenpaket (106) von dem zumindest einen weiteren Kommunikationsteilnehmer (108, 204, 206) über den geteilten Übertragungskanal (208) und Ermitteln (110) eines dem weiteren Kommunikationsteilnehmer (108, 204, 206) zugeordneten Prioritätswertes (112) aus dem Datenpaket (106), wobei der zumindest eine weitere Kommunikationsteilnehmer (108, 204, 206) ausgebildet ist, um Datenpakete mit je verschiedenen Prioritätswerten zu senden; und
- Senden (114) des Datenpakets von dem ersten Kommunikationsteilnehmer (104, 202) über den geteilten Übertragungskanal (208) in Abhängigkeit von dem Prioritätswert (112).

2. Verfahren (100) nach Anspruch 1, ferner umfassend:
Speichern der jeweils zuletzt ermittelten, unterschiedlichen Kommunikationsteilnehmern zugeordneten Prioritätswerte (112, 518) aus Datenpaketen (106, 516) unterschiedlicher Kommunikationsteilnehmer.

3. Verfahren (100) nach Anspruch 2, wobei das Datenpaket vom ersten Kommunikationsteilnehmer (104, 202) in Abhängigkeit von dem höchsten einem weiteren Kommunikationsteilnehmer (108, 204, 206) zugeordneten Prioritätswert (112) gesendet wird, der ermittelt aus jeweiligen Datenpaketen von verschiedenen Kommunikationsteilnehmern gespeichert ist.

4. Verfahren (100) nach einem der vorhergehenden Ansprüche, das Verfahren (100) ferner umfassend:
Vergleichen (522) des einem weiteren Kommunikationsteilnehmer (108, 204, 206) zugeordneten Prioritätswertes (518) mit einem dem ersten Kommunikationsteilnehmer (104, 202) zugeordneten ersten Prioritätswert (512, 602),
wobei das Datenpaket vom ersten Kommunikationsteilnehmer (104, 202) gesendet wird, falls der erste Prioritätswert (512, 602) zumindest so hoch ist wie der höchste einem weiteren Kommunikationsteilnehmer (108, 204, 206) zugeordnete Prioritätswert (518).

5. Verfahren (100) nach Anspruch 4, wobei der erste Prioritätswert (512) aus einem zuletzt vom ersten Kommunikationsteilnehmer (202) über den geteilten Übertragungskanal (208) gesendeten Datenpaket (510) ermittelt wird.

6. Verfahren (100) nach einem der Ansprüche 4 oder 5, wobei der erste Prioritätswert (602) nach einer vorbestimmten Anzahl gesendeter Datenpakete in einem separaten Datenpaket (702) über den geteilten Übertragungskanal (208) gesendet wird.

7. Verfahren (100) nach Anspruch 6, wobei der erste Prioritätswert (602) zu einem Datenpaket korrespondiert, das in einer Warteschlange von zu sendenden Datenpaketen vom ersten Kommunikationsteilnehmer (202) eine höchste Priorität (502) hat.

8. Verfahren (100) nach einem der Ansprüche 4 bis 7, wobei der erste Prioritätswert (602) aus einem vom ersten Kommunikationsteilnehmer empfangenen Informationssignal (604) ermittelt wird, wobei das Informationssignal (604) von einer Vorrichtung (212) des ersten Kommunikationsteilnehmers (202) bereitgestellt ist, die ebenfalls zu sendende Datenpakete bereitstellt.

9. Verfahren (100) nach einem der Ansprüche 4 bis 8, wobei auf ein Senden eines Datenpakets vom ersten Kommunikationsteilnehmer (202) innerhalb eines dafür vorgesehenen Zeitrahmens verzichtet wird, falls der erste Prioritätswert (512, 602) geringer ist, als der einem weiteren Kommunikationsteilnehmer (108, 204, 206) zugeordnete Prioritätswert (518).

10. Verfahren (100) nach einem der Ansprüche 4 bis 9, wobei der erste Kommunikationsteilnehmer (104, 202) ein Datenpaket dann sendet, falls ein weiterer Kommunikationsteilnehmer (108, 204, 206), der in einem vorangehenden Kommunikationszyklus (430) ein Datenpaket eines Prioritätswertes (518) gesendet hat, der höher als der erste Prioritätswert (512, 602) ist, in einem Zeitschlitz (434), der dem weiteren Kommunikationsteilnehmer (108, 204, 206) zugeordnet ist, kein Datenpaket sendet.

11. Verfahren (100) nach einem der vorhergehenden Ansprüche, wobei als der geteilte Übertragungskanal (208) ein Kommunikationsbus eines Kraftfahrzeugs bereitgestellt wird.

12. Steuergerät (214), das zum Steuern eines Sendens (114) von Datenpaketen gemäß einem der Ansprüche 1 bis 11 ausgebildet ist, wobei das Steuergerät (214) einen Maximumfinder aufweist, der dazu eingerichtet ist, aus einer vorbestimmten Anzahl von empfangenen Datenpaketen (516) einen maximalen Prioritätswert (518) zu ermitteln und abzuspeichern.

13. Steuergerät (214) nach Anspruch 12, wobei das Steuergerät (214) einen Komparator (522) aufweist, der dazu ausgebildet ist, einen dem Steuergerät (214) zugeordneten Prioritätswert (512) mit einem Prioritätswert (518), der einem anderen Kommunikationsteilnehmer zugeordnet ist, zu vergleichen.

14. System (500, 600, 700) mit zumindest einem Steuergerät (214) gemäß Anspruch 12 oder 13, wobei das System zumindest eine zu einem Steuergerät (214) korrespondierende Datensteuerungsvorrichtung (212) aufweist, die dazu ausgebildet ist, dem Steuergerät (214) Datenpakete zum Senden bereitzustellen, wobei die Datensteuerungsvorrichtung (212) ferner dazu ausgebildet ist, ein Informationssignal (604) mit einem dem Steuergerät zugeordneten Prioritätswert (602) an das korrespondierende Steuergerät (214) zu senden.

15. Kraftfahrzeug mit einem System (500, 600, 700) gemäß Anspruch 14 und/oder zumindest einem Steuergerät (214) gemäß Anspruch 12 oder 13, wobei der geteilte Übertragungskanal (208) durch einen Kommunikationsbus des Kraftfahrzeugs ausgebildet ist.

## Claims

1. Method (100) for transmitting at least one data packet from a first communications participant (104, 202) via a transmissions channel (208) shared with at least one further communications participant (108, 204, 206), wherein data packets are transmitted from the communications participants (104, 108, 202, 204, 206) according to a round-robin method via the shared transmissions channel (208), the method (100) comprising:
- receiving (102), at the first communications participant (202), at least one data packet (106) from the at least one further communications participant (108, 204, 206) via the shared transmissions channel (208) and determining (110) from the data packet (106) a priority value (112) assigned to the further communications participant (108, 204, 206), wherein the at least one further communications participant (108, 204, 206) is configured to transmit data packets having respective different priority values; and
- transmitting (114) the data packet from the first communications participant (104, 202) via the shared transmissions channel (208) based on the priority value (112).

2. Method (100) according to claim 1, further comprising:
storing the most recently determined priority values (112, 518), assigned to different communications participants, from data packets (106, 516) of different communications participants.

3. Method (100) according to claim 2, wherein the data packet is transmitted by the first communications participant (104, 202) as a function of the highest priority value (112) assigned to a further communications participant (108, 204, 206), which priority value, determined from respective data packets, is stored by different communications participants.

4. Method (100) according to one of the preceding claims, the method (100) further comprising:
comparing (522) the priority value (518), assigned to a further communications participant (108, 204, 206), with a first priority value (512, 602) assigned to the first communications participant (104, 202),
wherein the data packet is transmitted by the first communications participant (104, 202) if the first priority value (512, 602) is at least as high as the highest priority value (518) assigned to a further communications participant (108, 204, 206).

5. Method (100) according to claim 4, wherein the first priority value (512) is determined from a data packet (510) last transmitted by the first communications participant (202) via the shared transmissions channel (208).

6. Method (100) according to one of claims 4 or 5, wherein the first priority value (602), after a prespecified number of transmitted data packets, is transmitted in a separate data packet (702) via the shared transmissions channel (208).

7. Method (100) according to claim 6, wherein the first priority value (602) corresponds to a data packet which has a highest priority (502) in a queue of data packets to be transmitted from the first communications participant (202).

8. Method (100) according to one of claims 4 through 7, wherein the first priority value (602) is determined from an information signal (604) received from the first communications participant, wherein the information signal (604) is provided by a device (212) of the first communications participant (202) which also provides data packets to be transmitted.

9. Method (100) according to one of claims 4 through 8, wherein transmitting a data packet from the first communications participant (202) within a time frame provided for this purpose is dispensed with if the first priority value (512, 602) is lower than the priority value (518) assigned to a further communications participant (108, 204, 206).

10. Method (100) according to one of claims 4 through 9, wherein the first communications participant (104, 202) then transmits a data packet if a further communications participant (108, 204, 206), which, in a preceding communications cycle (430), has transmitted a data packet of a priority value (518) higher than the first priority value (512, 602), does not transmit a data packet in a time slot (434) which is assigned to the further communications participant (108, 204, 206).

11. Method (100) according to one of the preceding claims, wherein a communications bus of a motor vehicle is provided as the shared transmissions channel (208).

12. Control device (214) designed to control a transmission (114) of data packets according to one of claims 1 through 11, wherein the control device (214) has a maximum finder configured to determine and store a maximum priority value (518) from a prespecified number of received data packets (516).

13. Control device (214) according to claim 12, wherein the control device (214) has a comparator (522) which is designed to compare a priority value (512), assigned to the control device (214), with a priority value (518) assigned to another communications participant.

14. System (500, 600, 700) having at least one control device (214) according to claim 12 or 13, wherein the system has at least one data control device (212), corresponding to a control device (214), which is designed to provide the control device (214) with data packets for transmitting, wherein the data control device (212) is further designed to transmit to the corresponding control device (214) an information signal (604) having a priority value (602) assigned to the control device.

15. Motor vehicle having a system (500, 600, 700) according to claim 14 and/or at least one control device (214) according to claim 12 or 13, wherein the shared transmissions channel (208) is formed by a communications bus of the motor vehicle.

## Revendications

1. Procédé (100) d'émission d'au moins un paquet de données d'un premier abonné de communication (104, 202) par l'intermédiaire d'un canal de transmission (208) partagé avec au moins un autre abonné de communication (108, 204, 206), dans lequel des paquets de données des abonnés de communication (104, 108, 202, 204, 206) sont émis selon un procédé circulaire par l'intermédiaire du canal de transmission (208) partagé, le procédé (100) comprenant :
- la réception (102), par le premier abonné de communication (202), d'au moins un paquet de données (106) de l'au moins un autre abonné de communication (108, 204, 206) par l'intermédiaire du canal de transmission (208) partagé et la détermination (110) d'une valeur de priorité (112) affectée à l'autre abonné de communication (108, 204, 206) à partir du paquet de données (106), dans lequel l'au moins un autre abonné de communication (108, 204, 206) est conçu pour émettre des paquets de données de différentes valeurs de priorité ; et
- l'émission (114) du paquet de données par le premier abonné de communication (104, 202) par l'intermédiaire du canal de transmission (208) partagé en fonction de la valeur de priorité (112).

2. Procédé (100) selon la revendication 1, comprenant en outre :
la mémorisation des valeurs de priorité (112, 518) affectées à différents abonnés de communication respectivement déterminées en dernier à partir des paquets de données (106, 516) de différents abonnés de communication.

3. Procédé (100) selon la revendication 2, dans lequel le paquet de données du premier abonné de communication (104, 202) est émis en fonction de la valeur de priorité (112) la plus haute affectée à un autre abonné de communication (108, 204, 206), qui est mémorisée après avoir été déterminée à partir de paquets de données respectifs de différents abonnés de communication.

4. Procédé (100) selon l'une quelconque des revendications précédentes, le procédé (100) comprenant en outre :
la comparaison (522) de la valeur de priorité (518) affectée à un autre abonné de communication (108, 204, 206) avec une première valeur de priorité (512, 602) affectée au premier abonné de communication (104, 202),
dans lequel le paquet de données est émis par le premier abonné de communication (104, 202), si la première valeur de priorité (512, 602) est au moins aussi élevée que la valeur de priorité (518) la plus haute affectée à un autre abonné de communication (108, 204, 206).

5. Procédé (100) selon la revendication 4, dans lequel la première valeur de priorité (512) est déterminée à partir d'un paquet de données (510) émis en dernier par le premier abonné de communication (202) par l'intermédiaire du canal de transmission (208) partagé.

6. Procédé (100) selon l'une quelconque des revendications 4 ou 5, dans lequel la première valeur de priorité (602) est émise après un nombre prédéfini de paquets de données émis dans un paquet de données (702) séparé par l'intermédiaire du canal de transmission (208) partagé.

7. Procédé (100) selon la revendication 6, dans lequel la première valeur de priorité (602) correspond à un paquet de données, qui a une priorité (502) la plus élevée dans une file d'attente de paquets de données à émettre par le premier abonné de communication (202).

8. Procédé (100) selon l'une quelconque des revendications 4 à 7, dans lequel la première valeur de priorité (602) est déterminée à partir d'un signal d'informations (604) reçu par le premier abonné de communication, dans lequel le signal d'informations (604) est mis à disposition par un dispositif (212) du premier abonné de communication (202), qui met également à disposition les paquets de données à émettre.

9. Procédé (100) selon l'une quelconque des revendications 4 à 8, dans lequel une émission d'un paquet de données par le premier abonné de communication (202) au sein d'une période prévue à cet effet est abandonnée, si la première valeur de priorité (512, 602) est inférieure à la valeur de priorité (518) affectée à un autre abonné de communication (108, 204, 206).

10. Procédé (100) selon l'une quelconque des revendications 4 à 9, dans lequel le premier abonné de communication (104, 202) émet un paquet de données si un autre abonné de communication (108, 204, 206), qui a émis, pendant un cycle de communication (430) précédent, un paquet de données d'une valeur de priorité (518), qui est supérieure à la première valeur de priorité (512, 602), dans un multiplexage temporel (434), qui est affectée à l'autre abonné de communication (108, 204, 206), n'émet aucun paquet de données.

11. Procédé (100) selon l'une quelconque des revendications précédentes, dans lequel un bus de communication d'un véhicule automobile est mis à disposition comme canal de transmission (208) partagé.

12. Appareil de commande (214), qui est conçu pour la commande d'une émission (114) de paquets de données selon l'une quelconque des revendications 1 à 11, dans lequel l'appareil de commande (214) présente un chercheur de maximum qui est conçu pour déterminer et mémoriser une valeur de priorité (518) maximale à partir d'un nombre prédéfini de paquets de données (516) reçus.

13. Appareil de commande (214) selon la revendication 12, dans lequel l'appareil de commande (214) présente un comparateur (522) qui est conçu pour comparer une valeur de priorité (512) affectée à l'appareil de commande (214) avec une valeur de priorité (518), qui est affectée à un autre abonné de communication.

14. Système (500, 600, 700) comprenant au moins un appareil de commande (214) selon la revendication 12 ou 13, dans lequel le système présente au moins un dispositif de commande de données (212) correspondant à l'appareil de commande (214), qui est conçu pour mettre à disposition de l'appareil de commande (214) des paquets de données pour émission, dans lequel le dispositif de commande de données (212) est en outre conçu pour émettre un signal d'informations (604) avec une valeur de priorité (602) affectée à l'appareil de commande à l'appareil de commande (214) correspondant.

15. Véhicule automobile comprenant un système (500, 600, 700) selon la revendication 14 et/ou au moins un appareil de commande (214) selon la revendication 12 ou 13, dans lequel le canal de transmission (208) partagé est réalisé par un bus de communication du véhicule automobile.
